# FASCICULE DE BREVET EUROPEEN

(11) **EP 1 649 957 B1**
(45) Date de publication et mention de la délivrance du brevet: **28.05.2008**
(21) Numéro de dépôt: 05292176.4
(22) Date de dépôt: 17.10.2005
(51) Int. Cl.: B23D 29/02

(54) **Dispositif de coupe et de marquage d'un câble métallique**
Vorrichtung zum Schneiden und Markieren von metallischen Kabeln
Device for cutting and marking a metallic cable

(30) Priorité: 19.10.2004 FR 0411045
(43) Date de publication de la demande: 26.04.2006
(73) Titulaire: LABINAL, 78180 Montigny-le-Bretonneux (FR)
(72) Inventeur: Laurent, Didier, 31620 Fronton (FR)
(74) Mandataire: Nguyen, Dominique

(56) Documents cités:
- FR-A- 898 730
- FR-A- 1 443 560
- US-A- 1 381 024

## Description

L'invention concerne un dispositif de coupe et de marquage d'un câble métallique, en particulier d'un câble électrique, ce dispositif comprenant des moyens de support et de guidage du câble et au moins un levier articulé sur ces moyens de support et présentant une arête tranchante qui est déplaçable vers le support pour la coupe du câble.

Le raccordement d'un câble électrique à une pièce quelconque doit respecter une norme sur la longueur du câble servant au raccordement proprement dit, c'est-à-dire sur la longueur de câble qui doit être engagée dans une ouverture ou un passage de la pièce pour que le raccordement soit correct, cette longueur variant en fonction du diamètre du câble électrique.

Dans la technique traditionnelle, on procède d'abord à la coupe du câble au moyen d'une pince coupante ou d'un outil analogue approprié, puis le câble coupé est placé sur un gabarit de marquage et on y appose une marque à une distance prédéterminée de son extrémité coupée, par exemple au moyen d'un stylo à encre indélébile.

La coupe et le marquage s'effectuent donc de façon successive et nécessitent l'utilisation d'outils différents. L'opération de marquage est au moins aussi longue que l'opération de coupe et se traduit par une perte de temps qui peut être très importante lorsque le nombre de câbles à traiter est élevé.

La présente invention a notamment pour but d'apporter une solution simple, efficace et économique à ce problème.

Elle propose à cet effet un dispositif de coupe et de marquage d'un câble métallique, en particulier d'un câble électrique, comprenant des moyens de support et de guidage du câble et au moins un levier articulé sur les moyens de support et présentant une arête tranchante déplaçable vers les moyens de support pour la coupe du câble porté par les moyens de support, caractérisé en ce qu'il comprend également des moyens de marquage du câble, qui sont portés par ledit levier pour venir en contact avec le câble et y apposer une marque au moment où l'arête tranchante effectue la coupe du câble.

Grâce au dispositif selon l'invention, la coupe et le marquage du câble sont simultanés et effectués au moyen d'un même outil. Il en résulte un gain de temps appréciable et un gain de productivité.

De plus, en réalisant simultanément la coupe et le marquage du câble, on évite les risques d'omission du marquage des câbles après leur coupe.

Les moyens de marquage sont positionnés sur le levier précité à distance de l'arête tranchante dans la direction des moyens de support et de guidage du câble, la distance entre les moyens de marquage et l'arête tranchante étant déterminée en fonction du diamètre du câble de façon à respecter la norme précitée de raccordement des câbles électriques.

De préférence, les moyens de marquage sont montés sur le levier par l'intermédiaire de moyens élastiquement déformables, pour éviter tout risque de détérioration des moyens de marquage au moment de la coupe du câble.

Dans un mode de réalisation de l'invention, les moyens de marquage comprennent un récipient contenant un liquide coloré à séchage rapide, tel par exemple qu'une encre, une peinture, un vernis ou analogue, ces moyens de marquage étant, de façon économique, constitués par un stylo du type à pointe feutre, qui est monté dans un support tubulaire porté par le levier.

Avantageusement, ce support tubulaire contient un ressort qui permet un déplacement longitudinal du stylo dans le sens opposé aux moyens de support du câble, ce qui évite tout risque d'écrasement de la pointe feutre sur le câble lors du marquage.

En variante, les moyens de marquage peuvent être du type à tampon encreur, par exemple pour l'apposition sur le câble d'une marque ou d'un signe de traçabilité.

Le dispositif selon l'invention se présente avantageusement sous la forme d'une pince à deux mâchoires, dont la première porte les moyens de support et de guidage du câble et dont la seconde porte les moyens de marquage et comprend une arête ou une lame de coupe.

Les moyens de support et de guidage du câble sont par exemple constitués par une plaquette fixée sur la première mâchoire et présentant une rainure de réception du câble, cette rainure s'étendant sensiblement perpendiculairement au plan de coupe défini par les deux mâchoires.

Les moyens de support des moyens de marquage sont alors fixés sur la deuxième mâchoire en regard de la rainure de la plaquette de support et guidage du câble, cette fixation étant amovible et éventuellement réglable.

L'invention sera mieux comprise à la lecture de la description qui suit, faite à titre d'exemple en référence aux dessins annexés dans lesquels :
- la figure 1 est une vue schématique partielle de face d'un dispositif selon l'invention ;
- la figure 2 est une vue schématique à plus grande échelle et en coupe de ce dispositif selon la ligne II-II de la Figure 1.

Le dispositif selon l'invention qui est représenté aux dessins, est essentiellement constitué d'une pince coupante 10 d'un type habituel, dont une première mâchoire 12, avantageusement la mâchoire inférieure, porte des moyens 14 de support et de guidage d'un câble 16 et dont l'autre mâchoire 18, ici la mâchoire supérieure, porte des moyens 20 de marquage du câble 16, ces moyens 20 étant destinés à apposer sur le câble 16 une marque à une distance d du plan de coupe C défini par les mâchoires 12, 18 de la pince 10.

Les moyens 14 de support et de guidage du câble 16 comprennent par exemple une plaquette 22 qui est fixée sur la face latérale extérieure de la mâchoire inférieure 12 par une vis 24 et qui comporte, sur sa face supérieure une rainure en V 26 de réception et de guidage du câble 16, cette rainure 26 s'étendant sur toute la longueur de la plaquette 22 dans une direction qui est perpendiculaire au plan de coupe C défini par les mâchoires 12, 18 de la pince 10.

Les moyens de marquage 20 sont avantageusement constitués par un stylo à pointe feutre qui est logé dans un support tubulaire 28 monté d'une façon quelconque appropriés, par exemple par clipsage, sur une patte 30 fixée par exemple au moyen d'une vis 32 sur la face latérale intérieure de la mâchoire supérieure 18 de la pince.

Le stylo 20 contenu dans le support tubulaire 28 est sollicité axialement vers le bas, c'est-à-dire en direction des moyens 14 de support et de guidage du câble 16, par un ressort 34 monté entre l'extrémité supérieure fermée du support 28 et l'extrémité supérieure du stylo 20.

Le déplacement vers le bas du stylo 20 est limité par butée d'un épaulement 36 du corps du stylo sur un rebord interne 38 de l'extrémité inférieure du support 28.

Le fonctionnement du dispositif selon l'invention découle à l'évidence de ce qui précède : le câble à couper 16 est placé dans la rainure 26 des moyens 14, puis la pince est serrée pour rapprocher les deux mâchoires 12,18 l'une de l'autre. Quand l'arête tranchante 40 formée sur la mâchoire 18 arrive au contact du câble 16 pour le couper, la pointe 42 du stylo 20 est appliquée sur ce câble à la distance d du plan de coupe C.

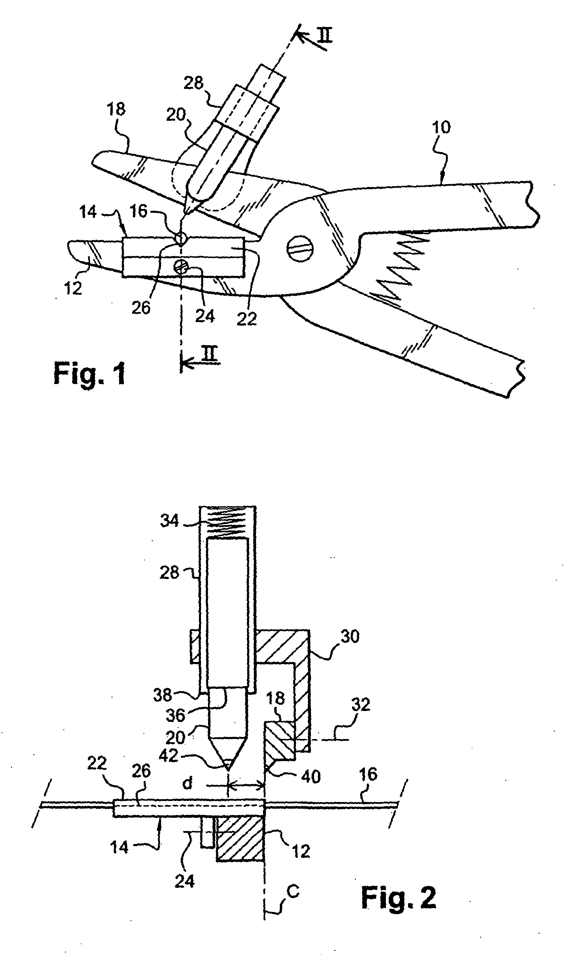

Tout risque d'écrasement de la pointe 42 sur le câble 16 est évité grâce à la possibilité du retrait du stylo 20 dans le support tubulaire 28, ce retrait se traduisant par une compression du ressort 34 qui à l'ouverture suivante de la pince 10, ramène le stylo 20 dans la position représentée en Figure 2.

On peut adapter le dispositif selon l'invention à des câbles 16 de diamètres différents en modifiant la distance d entre le plan de coupe C et la pointe du stylo 20.

On peut pour cela monter le support 28 du stylo sur des pattes 30 de dimensions différentes, ou bien prévoir plusieurs positions de clipsage du support 28 sur la patte 30 précitée.

On peut également prévoir plusieurs dispositifs selon l'invention, qui sont chacun adapté à un diamètre de câble.

Bien entendu, le dispositif selon l'invention peut se présenter sous une forme autre que celle d'une pince coupante, par exemple sous forme d'un outil monté sur un support fixe. Dans ce cas, les moyens 14 de support et de guidage du câble sont portés ou formés par le support fixe et les moyens 20 de marquage sont portés par un levier articulé sur ce support fixe et comportant une arête tranchante.

## Revendications

1. Dispositif de coupe et de marquage d'un câble métallique (16), en particulier d'un câble électrique, comprenant des moyens (14) de support et de guidage du câble et au moins un levier (18) articulé sur les moyens de support et présentant une arête tranchante (40) déplaçable vers les moyens de support pour la coupe du câble (16), **caractérisé en ce qu**'il comprend également des moyens (20) de marquage du câble, portés par le levier (18) pour venir en contact avec le câble (16) et apposer sur le câble une marque au moment où l'arête tranchante (40) effectue la coupe du câble (16).

2. Dispositif selon la revendication 1, **caractérisé en ce que** les moyens de marquage (20) sont positionnés sur le levier (18) à distance de l'arête tranchante (40) dans la direction des moyens (14) de support et de guidage du câble.

3. Dispositif selon la revendication 2, **caractérisé en ce que** la distance (d) entre les moyens de marquage (20) et l'arête tranchante (40) est déterminée en fonction du diamètre du câble (16).

4. Dispositif selon l'une des revendications précédentes, **caractérisé en ce que** les moyens de marquage (20) comprennent un récipient contenant un liquide coloré à séchage rapide, tel par exemple qu'une encre, une peinture, un vernis ou analogue.

5. Dispositif selon l'une des revendications précédentes, **caractérisé en ce que** les moyens de marquage (20) sont montés de façon amovible sur ledit levier (18) par l'intermédiaire de moyens (34) élastiquement déformables.

6. Dispositif selon les revendications précédentes, **caractérisé en ce que** les moyens de marquage comprennent un stylo (20), du type à pointe feutre par exemple, monté dans un support tubulaire (28) porté par le levier (18) et contenant un ressort (34) permettant un déplacement longitudinal du stylo (20) dans le support tubulaire (28) dans le sens opposé aux moyens (14) de support et de guidage du câble (16).

7. Dispositif selon l'une des revendications précédentes, **caractérisé en ce qu**'il se présente sous la forme d'une pince (10) à deux mâchoires (12,18), dont la première porte les moyens (14) de support et de guidage du câble (16) et dont la seconde porte les moyens de marquage (20).

8. Dispositif selon la revendication 7, **caractérisé en ce que** les moyens (14) de support et de guidage du câble (16) comprennent une plaquette (22) fixée sur la première mâchoire (12) et présentant une rainure (26) de réception du câble (16), qui s'étend sensiblement perpendiculairement au plan de coupe (C) défini par les deux mâchoires (12, 18).

9. Dispositif selon la revendication 8, **caractérisé en ce que** les moyens de marquage (20) sont fixés sur la seconde mâchoire (18) en regard de la rainure (26) de la plaquette (22) précitée.

## Claims

1. Device for cutting and marking a metal cable (16), in particular an electrical cable, comprising means (14) for guiding and supporting the cable and at least one lever (18) articulated to the supporting means and having a cutting edge (40) that can be moved towards the supporting means for cutting the cable (16), **characterized in that** it also comprises means (20) for marking the cable, borne by the lever (18) in order to come into contact with the cable (16) and to apply a mark on the cable at the moment when the cutting edge (40) cuts the cable (16).

2. Device according to Claim 1, **characterized in that** the marking means (20) are positioned on the lever (18) at a distance from the cutting edge (40) in the direction of the means (14) for supporting and guiding the cable.

3. Device according to Claim 2, **characterized in that** the distance (d) between the marking means (20) and the cutting edge (40) is determined depending on the diameter of the cable (16).

4. Device according to one of the preceding claims, **characterized in that** the marking means (20) comprise a container containing a quick-drying coloured liquid, such as, for example, an ink, a paint, a varnish or the like.

5. Device according to one of the preceding claims, **characterized in that** the marking means (20) are removably mounted on said lever (18) using elastically deformable means (34).

6. Device according to the preceding claims, **characterized in that** the marking means comprise a pen (20), a felt-insert pen for example, mounted in a tubular support borne by the lever (18) and containing a spring (34) allowing longitudinal movement of the pen (20) within the tubular support (28) in the opposite direction to the means (14) for supporting and guiding the cable (16).

7. Device according to one of the preceding claims, **characterized in that** it takes the form of a pair of pliers (10) with two jaws (12, 18), the first of which bears the means (14) for supporting and guiding the cable (16) and the second of which bears the marking means (20).

8. Device according to Claim 7, **characterized in that** the means (14) for supporting and guiding the cable (16) comprise an insert (22) fixed to the first jaw (12) and having a groove (26) for accommodating the cable (16), which extends approximately perpendicular to the cutting plane (C) defined by the two jaws (12, 18) .

9. Device according to Claim 8, **characterized in that** the marking means (20) are fixed to the second jaw (18) facing the groove (26) in the aforementioned insert (22).

## Patentansprüche

1. Vorrichtung zum Schneiden und Markieren eines metallischen Kabels (16), insbesondere eines elektrischen Kabels, die Mittel (14) zur Auflage und Führung des Kabels und wenigstens einen Hebel (18) umfasst, der schwenkbar an den Mitteln zur Auflage angebracht ist, und eine zum Schneiden des Kabels (16) zu den Mitteln zur Auflage hin bewegbare Schneidkante (40) aufweist, **dadurch gekennzeichnet, dass** sie weiter vom Hebel (18) getragene Mittel (20) zum Markieren des Kabels umfasst, um in Kontakt mit dem Kabel (16) zu kommen und zum Zeitpunkt, an dem die Schneidkante (40) den Schnitt des Kabels (16) ausführt, eine Markierung auf das Kabel aufzutragen.

2. Vorrichtung nach Anspruch 1, **dadurch gekennzeichnet, dass** die Mittel zum Markieren (20) von der Schneidkante (40) in Richtung der Mittel (14) zur Auflage und Führung des Kabels beabstandet auf dem Hebel (18) positioniert sind.

3. Vorrichtung nach Anspruch 2, **dadurch gekennzeichnet, dass** der Abstand (d) zwischen den Mitteln zum Markieren (20) und der Schneidkante (40) in Abhängigkeit vom Durchmesser des Kabels (16) bestimmt ist.

4. Vorrichtung nach einem der vorhergehenden Ansprüche, **dadurch gekennzeichnet, dass** die Mittel zum Markieren (20) einen Behälter umfassen, der eine schnelltrocknende Farbflüssigkeit enthält, wie etwa Tinte, Farbe, Lack oder Entsprechendes.

5. Vorrichtung nach einem der vorhergehenden Ansprüche, **dadurch gekennzeichnet, dass** die Mittel zum Markieren (20) auf dem Hebel (18) durch elastisch verformbare Mittel (34) entfernbar angebracht sind.

6. Vorrichtung nach einem der vorangehenden Ansprüche, **dadurch gekennzeichnet, dass** die Mittel zum Markieren einen Schreibstift (20), beispielsweise mit Filzspitze, enthalten, der in einem vom Hebel (18) getragenen, röhrenförmigen Träger (28) angebracht ist, und der eine Feder (34) enthält, die eine längslaufende Bewegung des Schreibstifts (20) im röhrenförmigen Träger (28) in entgegengesetzter Richtung zu den Mitteln (14) zur Auflage und Führung des Kabels (16) gestattet.

7. Vorrichtung nach einem der vorhergehenden Ansprüche, **dadurch gekennzeichnet, dass** sie als Zange (10) mit zwei Backen (12, 18) ausgebildet ist, von denen die erste die Mittel (14) zur Auflage und Führung des Kabels (16) trägt, und von denen die zweite die Mittel zum Markieren (20) trägt.

8. Vorrichtung nach Anspruch 7, **dadurch gekennzeichnet, dass** die Mittel (14) zur Auflage und Führung des Kabels (16) ein Plättchen (22) umfassen, das auf der ersten Backe (12) befestigt ist und eine Rille (26) zur Aufnahme des Kabels (16) aufweist, die sich im Wesentlichen senkrecht zur Schnittebene (C), die durch die beiden Backen (12, 18) definiert ist, erstreckt.

9. Vorrichtung nach Anspruch 8, **dadurch gekennzeichnet, dass** die Mittel zum Markieren (20) auf der zweiten Backe (18) in Bezug auf die Rille (26) des oben genannten Plättchens (22) angebracht sind.
